# EUROPEAN PATENT APPLICATION

(11) **EP 4 339 867 A1**
(43) Date of publication of application: **20.03.2024**
(21) Application number: 23193197.3
(22) Date of filing: 24.08.2023
(51) Int. Cl.: G06Q 10/30, G06Q 30/02

(54) **INFORMATION PROCESSING SYSTEM, INFORMATION PROCESSING METHOD, AND PROGRAM**

(30) Priority: 13.09.2022 JP 2022145189
(71) Applicant: TOYOTA JIDOSHA KABUSHIKI KAISHA, Aichi-ken 471-8571 (JP)
(72) Inventor: MATSUMOTO, Masashi, Toyota-shi, 471-8571 (JP); NAKA, Masayuki, Toyota-shi, 471-8571 (JP); SEKI, Yasunobu, Toyota-shi, 471-8571 (JP); AWANO, Hiroki, Toyota-shi, 471-8571 (JP); KANEKO, Tsuyoshi, Toyota-shi, 471-8571 (JP); YONEKAWA, Kosuke, Toyota-shi, 471-8571 (JP)
(74) Representative: J A Kemp LLP

(57) **Abstract**

The awareness of users regarding uses of reused products are raised, and their awareness regarding the environment is thereby increased.
An information processing system includes information acquisition means for acquiring reuse information, the reuse information being information about an operating status of a reused product; storage means for storing association information associating the reused product with information about a terminal of a previous owner of the product before the product is reused as the reused product; and transmission processing means for transmitting, based on the association information stored in the storage means, the reuse information of the reused product acquired by the information acquisition means to a terminal associated with the reused product.

## Description

### BACKGROUND

The present disclosure relates to an information processing system, an information processing method, and a program for reused products.

Systems for notifying users of statuses of reused batteries have been known (see, for example, Japanese Unexamined Patent Application Publication No. 2021-158565).

### SUMMARY

Meanwhile, it has been desired to raise the awareness of users regarding uses of reused products and thereby to increase their awareness of the environment.

The present disclosure has been made to solve the above-described problem, and an object thereof is to provide an information processing system, an information processing method, and a program capable of raising the awareness of users regarding uses of reused products and thereby increasing their awareness of the environment.

In order to achieve the above-described object, in an aspect of the present disclosure,
an information processing system includes:
information acquisition means for acquiring reuse information, the reuse information being information about an operating status of a reused product;
storage means for storing association information associating the reused product with information about a terminal of a previous owner of the product before the product is reused as the reused product; and
transmission processing means for transmitting, based on the association information stored in the storage means, the reuse information of the reused product acquired by the information acquisition means to a terminal associated with the reused product.

In an aspect, the information processing system may further include incentive giving means for giving an incentive to the terminal associated with the reused product based on the reuse information of the reused product acquired by the information acquisition means.

In an aspect, when the incentive giving means determines that the reuse information of the reused product acquired by the information acquisition means is equal to or higher than a reference value, it may give an incentive to the terminal associated with the reused product.

In an aspect, the incentive giving means may increase, based on the reuse information of the reused product acquired by the information acquisition means, the number of incentives given to the terminal associated with the reused product as the number of times the reused product is reused increases.

In an aspect, the reuse information may contain position information of the reused product, and
when the transmission processing means determines that a position where the reused product is used has changed based on the position information of the reused product acquired by the information acquisition means, it may transmit the reuse information of the reused product to the terminal associated with the reused product based on the association information stored in the storage means.

In an aspect, the transmission processing means may calculate an arithmetic value by performing predetermined arithmetic processing based on the reuse information of the reused product acquired by the information acquisition means, and transmit the calculated arithmetic value as the reuse information to the terminal associated with the reused product.

In an aspect, the arithmetic value may be a ranking in regard to performance of products, a deviation value, a comparison value obtained by comparing the reuse information with a reference value, a cumulative value obtaining by accumulating the reuse information over a certain period, or an average value of the reuse information over a certain period.

In an aspect, the transmission processing means may have a predetermined character of a predetermined video game grow up, or develop a certain story according to the reuse information of the reused product acquired by the information acquisition means, and transmit information about the character that has grown up, or information about the developed certain story as the reuse information to the terminal associated with the reused product.

In an aspect, the information acquisition means may acquire identification information of the reused product together with the reuse information of the reused product, and
the transmission processing means may combine, based on a plurality of pieces of identification information of respective reused products acquired by the information acquisition means, a plurality of pieces of reuse information of respective reused products related to each other into one group, and transmit the reuse information of the group to terminals associated with the reused products of the group based on the plurality of pieces of identification information of the respective reused products of the group.

In an aspect, the transmission processing means may generate a sentence by applying the reuse information of the reused product acquired by the information acquisition means to a predetermined fixed sentence form, and transmit the generated sentence as the reuse information to the terminal associated with the reused product.

In an aspect, the reuse information may contain at least one of position information of the reused product, used-time information thereof, rotation information thereof, temperature information thereof, voltage information thereof, capacity information thereof, resistance information thereof, usage information thereof, and the number of times the reused product is reused.

In an aspect, the reused product may be a motor.

In order to achieve the above-described object, in an aspect of the present disclosure,
an information processing method includes:
acquiring reuse information, the reuse information being information about an operating status of a reused product;
storing association information associating the reused product with information about a terminal of a previous owner of the product before the product is reused as the reused product; and
transmitting, based on the stored association information, the acquired reuse information of the reused product to a terminal associated with the reused product.
In order to achieve the above-described object, an aspect of the present disclosure is
a program for causing a computer to perform:
   a process for acquiring reuse information, the reuse information being information about an operating status of a reused product;
   a process for storing association information associating the reused product with information about a terminal of a previous owner of the product before the product is reused as the reused product; and
   a process for transmitting, based on the stored association information, the acquired reuse information of the reused product to a terminal associated with the reused product.

According to the present disclosure, it is possible to provide an information processing system, an information processing method, and a program capable of raising the awareness of users regarding uses of reused products and thereby increasing their awareness of the environment.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a block diagram showing a schematic system configuration of an information processing system according to an embodiment;
Fig. 2 is a block diagram showing a schematic system configuration of a server according to an embodiment;
Fig. 3 is a flowchart showing a flow of an information processing method according to an embodiment;
Fig. 4 shows a configuration of an information processing system including no server; and
Fig. 5 is a block diagram showing a schematic system configuration of a server according to an embodiment.

### DESCRIPTION OF EMBODIMENTS

### First Embodiment

An embodiment according to the present disclosure will be described hereinafter with reference to the drawings.

In recent years, it has been desired to reuse products in view of the need to achieve carbon neutrality, sustainability, and resource protection, and therefore there is a demand for a system for promoting reuses of products.

To cope with such demands, an information processing system according to this embodiment promotes the reuse of a reused product by notifying the previous owner thereof of the operating status of the reused product. That is, the information processing system according to this embodiment raises the awareness of, instead of the current owner of the reused product or the retail store (the dealer) thereof, a previous user (i.e., a previous owner) of a reused product regarding the current use of the reused product by informing the previous owner of the active status of the reused product, i.e., informing the owner who owned the product in the past of the active status of the reused product. Further, by doing so, the information processing system according to this embodiment increases the awareness of the user (e.g., the previous owner) regarding the environment.

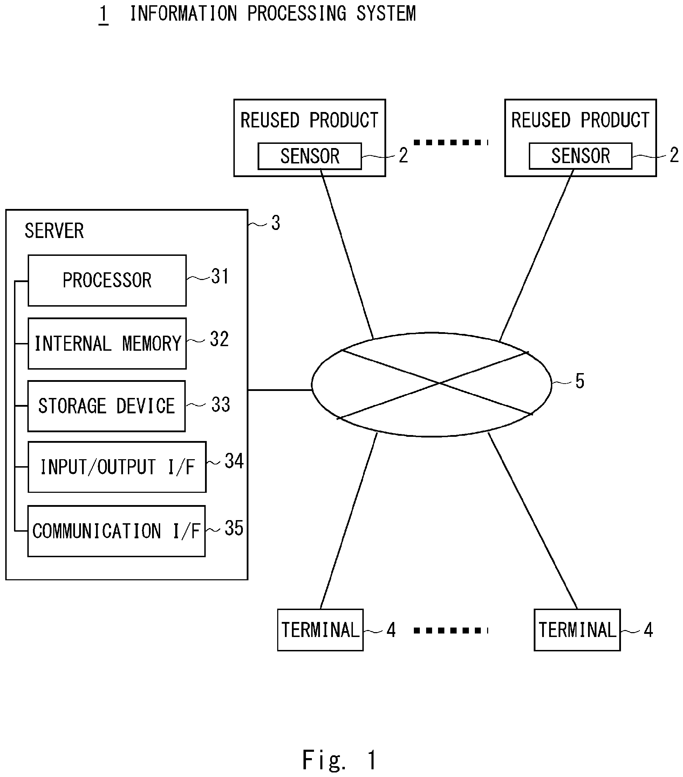

Fig. 1 is a block diagram showing a schematic system configuration of the information processing system according to this embodiment. The information processing system 1 according to this embodiment includes a plurality of sensors 2 that detect information of respective reused products, a server 3 that performs various types of information processing, and a plurality of terminals 4. Note that the respective numbers of sensors 2 and terminals 4 may be only one and are arbitrarily determined.

The sensors 2, the server 3, and the terminals 4 may, for example, transmit and receive information to each other through a communication network 5 such as the Internet. Each of the sensors 2, the server 3, and the terminals 4 may perform wireless communication through a wireless LAN (Local Area Network) or WiFi (Wireless Fidelity), and thereby connect to the communication network.

Each of the sensors 2 detects information about the operating status of a reused product (hereafter also referred to as reuse information). The reused product is a component or the like that is reused by a user, and examples thereof include a motor, a battery (such as a secondary battery, a fuel cell, and a capacitor), a converter, an inverter, a cooling pump, and an internal combustion engine disposed inside a vehicle or the like.

The sensor 2 (i.e., each of the sensors 2) is, for example, attached to a reused product and detects reuse information of that reused product. Examples of the sensor 2 include a rotation sensor, a temperature sensor, a voltage sensor, and a GPS (Global Positioning System) sensor that are already disposed inside a product. Note that the sensor 2 may be dedicatedly attached to a product when the product is reused. The sensor 2 may be a sensor that is already disposed inside a component or the like in which the reused product is disposed.

The sensor 2 detects, as the reuse information, for example, position information and/or used-time information of the reused product. In the case where the reused product is a motor or the like, the sensor 2 detects rotation information and/or temperature information of the reused product, and in the case where the reused product is a battery or the like, detects voltage information, capacity information, and/or resistance information of the reused product. Further, the sensor 2 may include an input device to which use information of the reused product, the number of times the reused product is reused, the number of times the reused product is repaired, and/or the like are input as the reuse information when the product is reused (such as when the reused product is sold).

For each reused product, identification information containing component ID information for identifying that reused product may be set in the sensor 2 in advance. The sensor 2 transmits, for example, the above-described detected reuse information and the identification information of the reused product to the server 3 at a predetermined cycle (i.e., at predetermined intervals).

The server 3 has, for example, a hardware configuration of an ordinary computer including a processor 3a such as a CPU (Central Processing Unit) or a GPU (Graphics Processing Unit), an internal memory 3b such as a RAM (Random Access Memory) or a ROM (Read Only Memory), a storage device 3c such as a HDD (Hard Disk Drive) or an SSD (Solid State Drive), an input/output I/F 3d for connecting peripheral devices such as a display, and a communication I/F 3e for communicating with other external apparatuses.

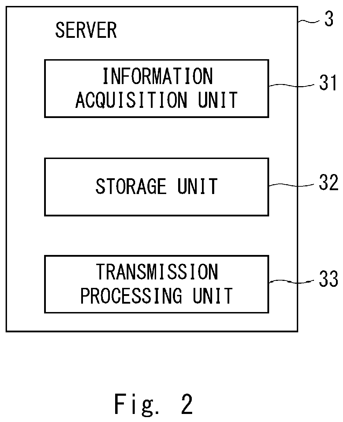

Fig. 2 is a block diagram showing a schematic system configuration of a server according to this embodiment. The server 3 includes an information acquisition unit 31 that acquires reuse information and identification information of a reused product, a storage unit 32 that stores association information of the reused product, and a transmission processing unit 33 that performs various types of arithmetic processing including data transmission.

The above-described information acquisition unit 31 and the sensors 2 are specific examples of the information acquisition means. The information acquisition unit 31 acquires reuse information and identification information transmitted from the sensor 2 of the reused product.

The storage unit 32 is a specific example of the storage means. The storage unit 32 is formed by, for example, the above-described storage device. The storage unit 32 stores association information associating the identification information of the reused product with information about the terminal 4 of the previous owner of the product before the product is reused as the reused product.

The previous owner of the product before the product is reused as the reused product (hereafter also referred to simply as the previous owner) is preferably the first owner of the product who has substantially nothing to do with the use and maintenance of the current reused product. This is because the first owner is more attached to the product than any of the other owners, and is more interested in the used status of the product than any of the other owners. Note that when a product is reused a plurality of times, such as the first time, the second time, and the third time, the term "previous owner" may be the immediately previous owner.

Examples of the terminal 4 include a mobile terminal such as a smartphone, and an information terminal such as a tablet-type terminal and a personal computer. The information of the terminal 4 of the previous owner (hereafter also referred to as terminal information) is, for example, an email address, a telephone number, and identification information used in an SNS (Social Network Service) of the previous owner.

The terminal information may be registered, for example, in the server 3 when the product is purchased at a retail store or the like. The storage unit 32 stores, as the association information, the identification information and the terminal information of the product while associating them with each other. It is possible to identify the previous owner of the reused product by using this association information, and transmit the reuse information of the reused product to the previous owner as will be described later.

The transmission processing unit 33 is a specific example of the transmission processing means. The transmission processing unit 33 transmits, based on the association information stored in the storage unit 32, the reuse information of the reused product acquired by the information acquisition unit 31 to the terminal 4 associated with the reused product.

The transmission processing unit 33 retrieves the identification information of the reused product acquired by the information acquisition unit 31 from the identification information (a plurality of pieces of identification information) in the association information (a plurality of pieces of association information) stored in the storage unit 32, and specifies the terminal information corresponding to the retrieved identification information. Then, the transmission processing unit 33 transmits the reuse information corresponding to the identification information to the terminal 4 corresponding to the specified terminal information.

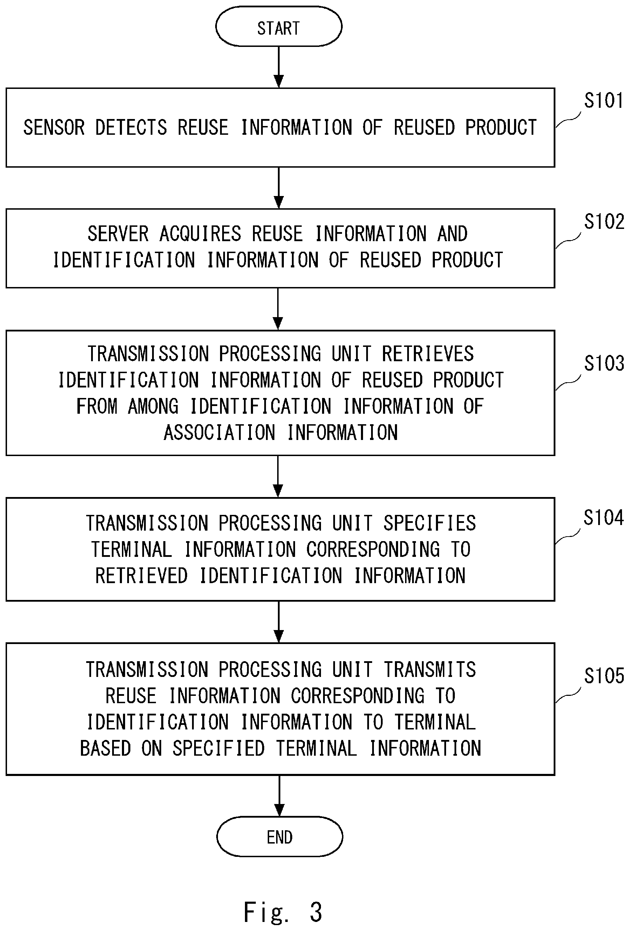

Next, an information processing method according to this embodiment will be described in detail. Fig. 3 is a flowchart showing a flow of the information processing method according to this embodiment.

The sensor 2 detects reuse information of a reused product, and transmits the detected reuse information and identification information of the reused product to the server 3 (Step S101).

The information acquisition unit 31 of the server 3 acquires the reuse information and the identification information of the reused product transmitted from the sensor 2 (Step S102).

The transmission processing unit 33 retrieves the identification information of the reused product acquired by the information acquisition unit 31 from the identification information (a plurality of pieces of identification information) in the association information (a plurality of pieces of association information) stored in the storage unit 32 (Step S103), and specifies the terminal information corresponding to the retrieved identification information (Step S104). The transmission processing unit 33 transmits, based on the specified terminal information, the reuse information corresponding to the identification information to the terminal 4 (Step S105).

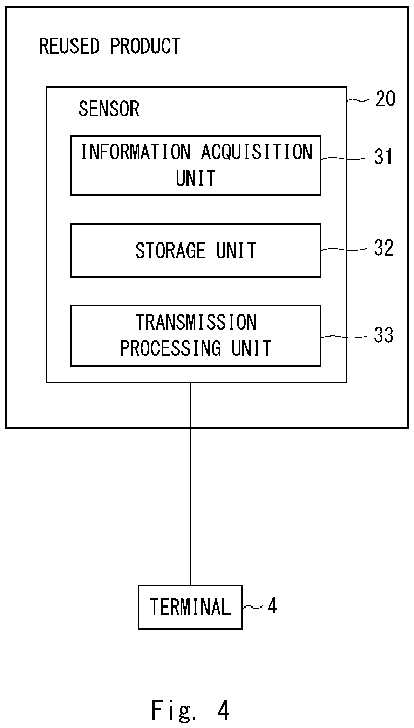

Note that although the information processing system 1 according to the above-described embodiment includes the sensors 2, the server 3, and the terminals 4, the configuration of the information processing system is not limited to this example. The information processing system 1 may include sensors 2 and terminals 4, but may not include the server 3. In this case, as shown in Fig. 4, the sensor 20 (e.g., each of the sensors 20) has the functions of the above-described information acquisition unit 31, the storage unit 32, and the transmission processing unit 33 of the server 3. Alternatively, the terminal 4 (e.g., each of the terminals 4) may have the functions of the above-described information acquisition unit 31, the storage unit 32, and the transmission processing unit 33 of the server 3.

As described above, the information processing system 1 according to this embodiment includes the information acquisition unit 31 that acquires reuse information of a reused product, the storage unit 32 that stores association information associating the reused product with terminal information (i.e., information about a terminal) of a previous owner of the reused product, and the transmission processing unit 33 that transmits, based on the association information stored in the storage unit 32, the reuse information of the reused product acquired by the information acquisition unit 31 to the terminal 4 associated with the reused product. Since the previous owner recognizes, on the terminal 4, the operating status of the reused product that he/she owned in the past, it is possible to raise his/her awareness regarding the use of the reused product, and thereby to increase his/her awareness regarding the environment.

### Second Embodiment

In this embodiment, the transmission processing unit 33 may calculate an arithmetic value by performing predetermined arithmetic processing based on reuse information of a reused product acquired by the information acquisition unit 31. Examples of the arithmetic value include relative arithmetic values such as a ranking in regard to performance of products and a deviation value, a comparison value obtained by comparing the reuse information with a reference value, a cumulative value obtaining by accumulating the reuse information over a certain period, and an average value of the reuse information over a certain period. More specifically, the arithmetic value may be a ranking calculated by comparing a plurality of pieces of reuse information of respective reused products within a specific region.

The transmission processing unit 33 may transmit, as the reuse information, the above-described calculated arithmetic value to the terminal 4 associated with the reused product. In this way, since the previous owner can objectively recognize the status of the product that he/she owned in the past, it is possible to increase his/her awareness regarding the use of the reused product.

Further, the transmission processing unit 33 may, for example, have a character of a predetermined video game grow up, or develop a certain story according to the reuse information of the reused product acquired by the information acquisition unit 31. More specifically, in the case where the reused product is a motor and the reuse information is the number of revolutions (or the rotation speed) of the motor, the transmission processing unit 33 may have the character of the predetermined video game grow up significantly, or develop the certain story significantly as the number of revolutions (or the rotation speed) of the motor increases. Note that the information about the character of the predetermined video game or the information about the certain story may be set in advance in the transmission processing unit 33.

The transmission processing unit 33 may transmit, as the reuse information, information about the predetermined character of the video game, which has been made to grow up, or the developed certain story to the terminal 4 associated with the reused product. By viewing this character or the story on the terminal 4, the previous owner can recognize the status of the product he/she owned in the past with more interest, thus making it possible to increase his/her awareness regarding the use of the reused product.

The transmission processing unit 33 may process the reuse information of the reused product acquired by the information acquisition unit 31. Further, the transmission processing unit 33 may transmit the processed reuse information to the terminal 4 associated with the reused product.

For example, when the reuse information of the reused product is position information, it is necessary to give a certain consideration to the personal information of the current owner of the reused product. To cope with this, the transmission processing unit 33 performs processing to expand the range of the position information of the reused product acquired by the information acquisition unit 31. Specifically, the transmission processing unit 33 performs processing on the position information about the address (e.g., address of **, ** street, ** city) of the reused product acquired by the information acquisition unit 31, and thereby converts it into position information on a nation basis or on a municipal basis (e.g., ** city).

The transmission processing unit 33 may combine, based on a plurality of pieces of identification information of respective reused products transmitted from respective sensors 2, a plurality of pieces of reuse information of respective reused products that are related to each other into one group. The transmission processing unit 33 may transmit the reuse information of the group to terminals 4 associated with the reused products of the group based on the plurality of pieces of identification information of the respective reused products of the group. The identification information of each reused product that is transmitted together with the reuse information by the above-described sensor 2 contains, for example, a group ID information for identifying the group to which that reused product belongs as well as its component ID information.

For example, the transmission processing unit 33 may combine, based on the group ID information of each of plurality of reused product, a plurality of reused products into one group in such a manner that a plurality of reused product having the same group ID information, such motors, batteries, and converters that are disposed inside the same vehicle and hence related to each other, are included in one group. Then, the transmission processing unit 33 transmit the combined group ID information to the terminals 4 associated with the reused products included in the group.

In this way, as the previous owner can look at (or check) the reuse information of reused products grouped into one group in a concentrated manner on the terminal 4, he/she can know the statuses of products he/she owned in the past with more interest, thus making it possible to increase his/her awareness regarding the use of the reused product.

The transmission processing unit 33 may generate a sentence by applying the reuse information of the reused product to a predetermined fixed sentence form, and transmit the generated sentence as the reuse information to the terminal 4 associated with the reused product. For example, the transmission processing unit 33 generates a sentence by applying the position information and the use information of the reused product to a predetermined fixed sentence form, and transmit the generated sentence as the reuse information to the terminal 4 associated with the reused product.

More specifically, the transmission processing unit 33 may transmit, based on position information "Northern Europe", use information "a motor for an aerogenerator", and rotation information "*** rpm" of a reused product, reuse information composed of a sentence "As (a motor for an aerogenerator) of (Northern Europe), it contributes at an average speed (*** rpm)." to the terminal 4. Further, for example, the transmission processing unit 33 may transmit, based on used-time information "** years" of a reused product, reuse information composed of a sentence "Despite a high load, it is active "** years" longer than the average used years." to the terminal 4 associated with the reused product.

In this way, by reporting reuse information by a sentence that is created by applying pieces of information to a predetermined fixed sentence form, instead of reporting reuse information just by a numerical value, it is possible to convey the reuse information to the previous owner in a more easy-to-understand and impressive manner, and thereby to increase his/her awareness regarding the use of the reused product.

The transmission processing unit 33 transits, for example, the reuse information of the reused product acquired by the information acquisition unit 31 to the terminal 4 at a predetermined cycle (i.e., at predetermined intervals). As a result, the previous owner can periodically recognize the status of the reused product he/she owned in the past on the terminal 4 at the predetermined cycle, thus making it possible to increase his/her awareness regarding the use of the reused product.

When the transmission processing unit 33 determines that the position where the reused product is used has changed based on the position information of the reused product, it may transmit the reuse information of the reused product to the terminal 4. Note that when the transmission processing unit 33 has determined that the reused product remains at a certain position or within a certain range for a certain period or longer based on the position information of the reused product, it infers (i.e., determines) that position or that range as the position where the reused product is used. In this way, the previous owner can know that the reused product is active in a wide range of areas across countries or the like, so that it is possible to raise the awareness of the user regarding the use of the reused product and thereby to increase his/her awareness regarding the environment.

For example, when the transmission processing unit 33 determines that the position where the reused product is used has changed from Japan to Africa based on the position information of the reused product, it transmits the position information as the reuse information to the terminal 4.

The transmission processing unit 33 may calculate a cumulative value by accumulating the reuse information over a certain period based on the reuse information of the reused product acquired by the information acquisition unit 31. Then, when the transmission processing unit 33 determines that the cumulative value reaches a reference value or larger, it transmits the cumulative value as the reuse information to the terminal 4 associated with the reused product.

In this way, since the previous owner can objectively recognize the status of the product that he/she owned in the past by looking at (or checking) the accumulated reuse information on the terminal 4, it is possible to increase his/her awareness regarding the use of the reused product.

The transmission processing unit 33 may periodically summarize the reuse information based on the reuse information of the reused product acquired by the information acquisition unit 31 and transmit the summarized reuse information as a report to the terminal 4 associated with the reused product. In this way, since the previous owner can look at (or check) the reuse information in a collective manner as a report on the terminal 4 and objectively recognize the status of the product that he/she owned in the past, it is possible to increase his/her awareness regarding the use of the reused product.

### Third Embodiment

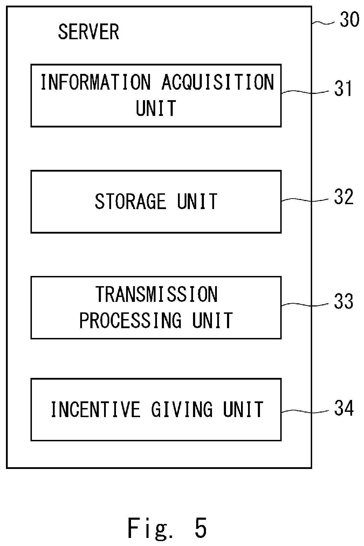

Fig. 5 is a block diagram showing a schematic system configuration of a server according to this embodiment. The server 30 according to this embodiment further includes an incentive giving unit 34 that gives an incentive to a terminal 4 associated with a reused product.

The incentive giving unit 34 is a specific example of the incentive giving means. The incentive giving unit 34 gives, based on reuse information of a reused product acquired by the information acquisition unit 31, an incentive to a terminal 4 associated with the reused product.

The incentive giving unit 34 determines that the reuse information of the reused product acquired by the information acquisition unit 31 is equal to or higher than a reference value, it may give an incentive to the terminal 4 associated with the reused product.

For example, when the incentive giving unit 34 determines that the number of times the reused product is used, acquired by the information acquisition unit 31 is equal to or higher than a reference value, it may give an incentive to the terminal 4 associated with the reused product. For example, an optimal value that is experimentally determined is set as the aforementioned reference value. The reference value may be set in advance in the incentive giving unit 34.

Further, the incentive giving unit 34 may increase, based on the reuse information of the reused product acquired by the information acquisition unit 31, the number of incentives given to the terminal 4 associated with the reused product as the number of times the reused product is reused increases.

It is possible to stimulate the previous owner by these incentives, so that it is possible to raise the awareness of the user regarding the use of the reused product, and thereby to increase his/her awareness regarding the environment.

Examples of the incentive include points or discount coupons (coupons) that can be used in shopping sites, services, and the like. For example, the incentive giving unit 34 may increase, based on the reuse information of the reused product acquired by the information acquisition unit 31, the number of points or discount coupons given to the terminal 4 associated with the reused product as the number of times the reused product is reused increases.

Several embodiments according to the present disclosure have been described above. However, these embodiments are shown as examples but are not shown to limit the scope of the disclosure. These novel embodiments can be implemented in various forms. Further, their components/structures may be omitted, replaced, or modified without departing from the scope of the disclosure. These embodiments and their modifications are included in the scope of the disclosure, and included in the scope equivalent to the invention specified in the claims.

The present disclosure can also be implemented, for example, by carrying out the processes shown in Fig. 3 by having a processor execute a computer program(s).

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (Read Only Memory), CD-R, CD-R/W, and semiconductor memories (such as mask ROM, PROM (Programmable ROM), EPROM (Erasable PROM), flash ROM, and RAM (Random Access Memory)).

The program may be provided to a computer using any type of transitory computer readable media. Examples of transitory computer readable media include electric signals, optical signals, and electromagnetic waves. Transitory computer readable media can provide the program to a computer through a wired communication line (e.g., electric wires, and optical fibers) or a wireless communication line.

Each of the components constituting the server 3 according to any of the above-described embodiments is, in addition to being able to be implemented by the program, able to be partially or entirely implemented by dedicated hardware such as an ASIC (Application Specific Integrated Circuit) or an FPGA (Field-Programmable Gate Array).

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. An information processing (1) system comprising:
information acquisition means (31) for acquiring reuse information, the reuse information being information about an operating status of a reused product;
storage means (32) for storing association information associating the reused product with information about a terminal (4) of a previous owner of the product before the product is reused as the reused product; and
transmission processing means (33) for transmitting, based on the association information stored in the storage means (32), the reuse information of the reused product acquired by the information acquisition means (31) to a terminal (4) associated with the reused product.

2. The information processing system (1) according to claim 1, further comprising incentive giving means (34) for giving an incentive to the terminal (4) associated with the reused product based on the reuse information of the reused product acquired by the information acquisition means (31).

3. The information processing system (1) according to claim 2, wherein when the incentive giving means (34) determines that the reuse information of the reused product acquired by the information acquisition means (31) is equal to or higher than a reference value, it gives an incentive to the terminal (4) associated with the reused product.

4. The information processing system (1) according to claim 2 or 3, wherein the incentive giving means (34) increases, based on the reuse information of the reused product acquired by the information acquisition means (31), the number of incentives given to the terminal (4) associated with the reused product as the number of times the reused product is reused increases.

5. The information processing system (1) according to claim 1 or 2, wherein the reuse information contains position information of the reused product, and when the transmission processing means (33) determines that a position where the reused product is used has changed based on the position information of the reused product acquired by the information acquisition means (31), it transmits the reuse information of the reused product to the terminal (4) associated with the reused product based on the association information stored in the storage means (32).

6. The information processing system (1) according to claim 1 or 2, wherein the transmission processing means (33) calculates an arithmetic value by performing predetermined arithmetic processing based on the reuse information of the reused product acquired by the information acquisition means (31), and transmits the calculated arithmetic value as the reuse information to the terminal (4) associated with the reused product.

7. The information processing system (1) according to claim 6, wherein the arithmetic value is a ranking in regard to performance of products, a deviation value, a comparison value obtained by comparing the reuse information with a reference value, a cumulative value obtaining by accumulating the reuse information over a certain period, or an average value of the reuse information over a certain period.

8. The information processing system (1) according to claim 1 or 2, wherein the transmission processing means (33) has a predetermined character of a predetermined video game grow up, or develops a certain story according to the reuse information of the reused product acquired by the information acquisition means (31), and transmits information about the character that has grown up, or information about the developed certain story as the reuse information to the terminal (4) associated with the reused product.

9. The information processing system (1) according to claim 1 or 2, wherein the information acquisition means (31) acquires identification information of the reused product together with the reuse information of the reused product, and the transmission processing means (33) combines, based on a plurality of pieces of identification information of respective reused products acquired by the information acquisition means (31), a plurality of pieces of reuse information of respective reused products related to each other into one group, and transmits the reuse information of the group to terminals (4) associated with the reused products of the group based on the plurality of pieces of identification information of the respective reused products of the group.

10. The information processing system (1) according to claim 1 or 2, wherein the transmission processing means (33) generates a sentence by applying the reuse information of the reused product acquired by the information acquisition means (31) to a predetermined fixed sentence form, and transmits the generated sentence as the reuse information to the terminal (4) associated with the reused product.

11. The information processing system (1) according to claim 1 or 2, wherein the reuse information contains at least one of position information of the reused product, used-time information thereof, rotation information thereof, temperature information thereof, voltage information thereof, capacity information thereof, resistance information thereof, usage information thereof, and the number of times the reused product is reused.

12. The information processing system (1) according to claim 1 or 2, wherein the reused product is a motor.

13. An information processing method comprising:
acquiring reuse information, the reuse information being information about an operating status of a reused product;
storing association information associating the reused product with information about a terminal (4) of a previous owner of the product before the product is reused as the reused product; and
transmitting, based on the stored association information, the acquired reuse information of the reused product to a terminal (4) associated with the reused product.

14. A program for causing a computer to perform:
a process for acquiring reuse information, the reuse information being information about an operating status of a reused product;
a process for storing association information associating the reused product with information about a terminal (4) of a previous owner of the product before the product is reused as the reused product; and
a process for transmitting, based on the stored association information, the acquired reuse information of the reused product to a terminal (4) associated with the reused product.
